(19) Europäisches Patentamt
European Patent Office
Office européen des brevets

(11) Veröffentlichungsnummer : **0 360 832 B1**

(12) **EUROPÄISCHE PATENTSCHRIFT**

(45) Veröffentlichungstag der Patentschrift :
20.03.91 Patentblatt 91/12

(51) Int. Cl.⁵ : **B60S 1/08**

(21) Anmeldenummer : 88905356.7

(22) Anmeldetag : 23.06.88

(86) Internationale Anmeldenummer :
PCT/DE88/00374

(87) Internationale Veröffentlichungsnummer :
WO 89/00119 12.01.89 Gazette 89/02

(54) **VORRICHTUNG ZUM REGENABHÄNGIGEN EIN- UND AUSSCHALTEN EINES ELEKTRISCHEN SCHEIBENWISCHERMOTORS.**

(30) Priorität : 08.07.87 DE 3722510

(43) Veröffentlichungstag der Anmeldung :
04.04.90 Patentblatt 90/14

(45) Bekanntmachung des Hinweises auf die
Patenterteilung :
20.03.91 Patentblatt 91/12

(84) Benannte Vertragsstaaten :
DE FR GB IT

(56) Entgegenhaltungen :
EP-A- 177 419
DE-A- 3 314 770
GB-A- 1 596 050

(73) Patentinhaber : ROBERT BOSCH GMBH
Postfach 10 60 50
W-7000 Stuttgart 10 (DE)

(72) Erfinder : STEINMANN, Helmut
Höllhäuserweg 66
W-7570 Baden-Baden (DE)

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

## Stand der Technik

Die Erfindung geht aus von einer Vorrichtung zum regenabhängigen Ein- und Ausschalten eines elektrischen Scheibenwischermotors in Fahrzeugen der im Oberbegriff des Anspruchs 1 definierten Gattung.

Bei einer bekannten Schaltvorrichtung dieser Art (DE-OS 22 39 359) ist der sog. Regensensor als kapazitiver Detektor ausgebildet. Dabei sind auf der Innenseite der Front- oder Windschutzscheibe im Wischbereich der Wischblätter drei Elektroden angebracht. Zwei Elektroden sind an einer Wechselspannung angeschlossen und stellen einen Kondensator dar, so daß sich zwischen beiden ein elektrisches Feld ausbildet. Die dritte Elektrode ist so angeordnet, daß bei trockener Windschutzscheibe ein nur kleines Streufeld des elektrischen Feldes zur ihr gelangt. An der dritten Elektrode wird das Sensorsignal abgenommen und an ein Addierglied gelegt, dem die Wechselspannung um 180° phasenverschoben zugeführt wird. Die Amplitude der Wechselspannung ist so dimensioniert, daß bei trockener Windschutzscheibe das resultierende Ausgangssignal des Addierers Null ist.

Das zur Herstellung von Front- oder Windschutzscheiben üblicherweise verwendete Glas hat eine Dielektrizitätskonstante $\varepsilon$ in der Größenordnung von 8. Durch die auf der Windschutzscheibe bei Regen sich bildenden Nässe (Wasser hat eine Dielektrizitätskonstante von $\varepsilon \approx 80$) wird der Feldlinienverlauf zwischen den beiden Kondensatorelektroden so geändert, daß ein großer Feldanteil zu der dritten, der sog. Meßelektrode gelangt. Die Signalamplitude des Sensorsignals wächst damit stark an. Am Addierer entsteht ein Ausgangssignal, das als Schließsignal an den Schalter für den Scheibenwischermotor gelangt. Der Wischermotor wird eingeschaltet. Bei wieder trockener Scheibe fehlt das Ausgangssignal des Addierers, und der Wischermotor wird abgeschaltet.

Bei dieser bekannten Schaltvorrichtung ergibt sich das Problem, daß der Regensensor nicht zwischen Beregnung und Wasserschlieren unterscheiden kann, die unter Umständen beim Wischen auf der Windschutzscheibe zurückbleiben. Als Folge davon wird der Wischer oft zu spät abgeschaltet und die Wischblätter wischen trocken. Die Regenautomatik arbeitet damit wenig zufriedenstellend.

## Vorteile der Erfindung

Die erfindungsgemäße Schaltvorrichtung mit den kennzeichnenden Merkmalen des Anspruchs 1 hat den Vorteil, daß die Wischblätter zielgerecht abgeschaltet werden, sobald keine durch Beregnung hervorgerufene zusätzliche Nässe innerhalb des Wischbereichs der Wischblätter auf der Windschutzscheibe vorhanden ist. Eine bleibende Nässe durch Wischschlieren ist ohne Einfluß auf die Abschaltung, da bei Waserschlieren die Amplitude des Sensorsignals konstant bleibt bzw. langsam abnimmt und damit keine Beitrag zur Aufrechterhaltung des Einschaltsignals leisten kann. Die für die Schaltvorrichtung erforderliche Steuereinheit läßt sich mit geringen zusätzlichen Mitteln in einer ohnehin vorhandene Wischerelektronik, z.B. für Intervallwischen, integrieren.

Durch die in den weiteren Ansprüchen aufgeführten Maßnahmen sind vorteilhafte Weiterbildungen und Verbesserungen der im Anspruch 1 angegebenen Schaltvorrichtung möglich.

## Zeichnung

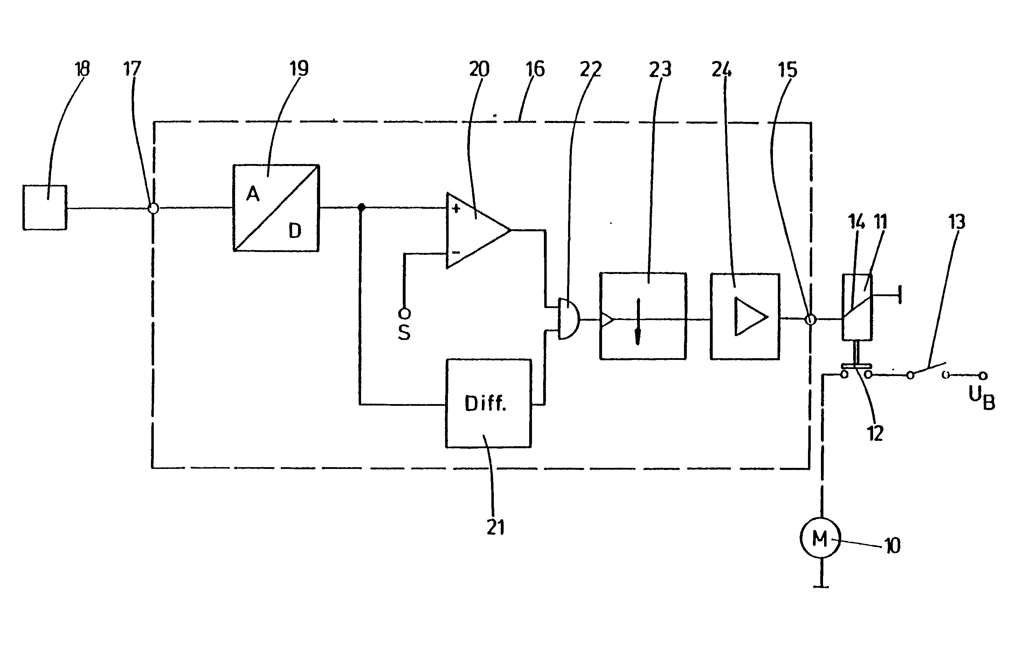

Die Erfindung ist anhand eines in der Zeichnung dargestellten Ausführungsbeispiels in der nachfolgenden Beschreibung näher erläuert. Dabei zeigt die Zeichnung ein Blockschaltbild einer Vorrichtung zum regenabhängigen Ein- und Ausschalten eines Scheibenwischermotors.

## Beschreibung des Ausführungsbeispiels

Die im Schaltbild dargestellte Schaltvorrichtung zum regenabhängigen Ein- und Ausschalten eines elektrischen Scheibenwischermotors 10 weist ein Schaltrelais 11 auf, dessen Schaltkontakt 12 im Stromkreis des Scheibenwischermotors 12 angeordnet ist. Der Schaltkontakt 12 kann dabei in Reihe mit dem Wischschalter 13 oder dem Zündschalter liegen, der von Hand zu betätigen ist und den Scheibenwischermotor 10 an die Plusklemme $U_B$ der Fahrzeugbatterie anschließt.

Die Relaiswicklung 14 des Schaltrelais 11 ist an dem Ausgang 15 einer Steuereinheit 16 angeschlossen, deren Eingang 17 mit dem Ausgang eines sog. Regensensors 18 verbunden ist. Der Regensensor 18, der sehr verschiedenartig ausgebildet sein kann, liefert ein Sensorsignal, dessen Amplitude abhängig ist von der Feuchte auf der Windschutzscheibe. Dabei ist die Signalamplitude direkt proportional der Feuchte auf der Front- oder Windschutzscheibe des Fahrzeugs. Als Regensensor 18 kann beispielsweise der in der DE-OS 22 39 359 beschriebene kapazitive Detektor verwendet werden, der drei Elektroden aufweist, die auf der Innenseite der Windschutzscheibe im Wischbereich der Wischblätter in der dort gezeigten Anordnung angebracht werden. Während zwei Elektroden an einer Wechselspannung angeschlossen sind, wird an der dritten Elektrode das Sensorsignal abgenommen.

Die vorzugsweise digitale Steuereinheit 16 ist derart ausgebildet, daß sie neben der Amplitudengröße des Sensorsignals auch noch die Änderungstendenz des Sensorsignals detektiert und oberhalb einer vorgegebenen Amplitudengröße und bei Vorliegen einer zeitlichen Amplitudenzunahme ein Einschaltsignal für das Schaltrelais 11 generiert. Hierzu weist die Steuereinheit 16 einen Analog-Digital-Wandler 19, einen Komparator 20, ein Differenzierglied 21, ein logisch UND-Gatter 22, ein Monoflop 23 und einen Verstärker 24 auf. Der Analog-Digital-Wandler 19 ist eingangsseitig mit dem Eingang 17 und ausgangsseitig einerseits mit dem Komparator 20 und andererseits mit dem Differenzierglied 21 verbunden. An den invertierenden Eingang 20 ist ein Schwellwert S gelegt. Der Komparator 20 erzeugt ein logisch "H-Signal" wenn das Ausgangssignal des Analog-Digital-Wandlers 19, das an seinem nicht invertierenden Eingang liegt, größer ist als die Schwelle S. Das Differenzierglied 21 erzeugt ein logisch H-Signal, solange die momentane Ausgangsgröße des Analog-Digital-Wandlers 19 immer größer als die vorhergehende ist. Die Ausgänge von Komparator 20 und Differenzierglied 21 sind auf die beiden Eingänge des logisch UND-Gatters 22 geführt, dessen Ausgang mit dem Eingang des Monoflops 23 verbunden ist. Die Rückstellzeit des Monoflops 23 ist größer eingestellt als die Taktperiode des Analog-Digital-Wandlers 19, so daß innerhalb der Verweilzeit des Monoflops 23 in seinem astabilen Zustand wenigstens zwei aufeinanderfolgende digitalisierte Abtastwerte des Sensorsignals als jeweils ein Ausgangssignal des UND-Gatters 22 an den Eingang des Monoflops 23 gelangen können. Der Q-Ausgang des Flip-Flops 23 ist über den Verstärker 24 mit dem Ausgang 15 der Steuereinheit 16 verbunden.

Die Wirkungsweise der Scheibenwischer-Schaltvorrichtung mit Steuereinheit 16, Regensensor 18 und Schaltrelais 11 ist wie folgt :

Ist der Wischschalter 13 bzw. der Zündschalter geschlossen und wird die Windschutzscheibe des Fahrzeugs beregnet, so liegt am Eingang 17 der Steuereinheit 16 eine relativ große Signalamplitude des Sensorsignals. Der digitalisierte Wert dieses Sensorsignals am Ausgang des Analog-Digital-Wandlers 19 wird damit größer sein als die Schwelle S, so daß am Ausgang des Komparators 20 H-Signal ansteht. Da bei fortwährendem Regen die Feuchtigkeit auf der Windschutzscheibe innerhalb jeder Wischperiode zunimmt und damit die Signalamplitude des Sensorsignals in jeder Wischperiode anwächst, wird auch am Ausgang des Differenzergliedes 21 ein logisch H-Signal auftreten. Damit nimmt auch der Ausgang des UND-Gatters 22 logisch H an, so daß das Monoflop 23 gesetzt wird und an dessen Q-Ausgang H-Potential auftritt. Über den Verstärker 24 gelangt damit Erregerstrom in die Erregerwicklung 14 und der Schaltkontakt 12 schließt, wodurch der Scheibenwischermotor 10 eingeschaltet wird. Solange der Regen anhält, wird sich dieser Schaltzustand des Schaltrelais 11 nicht ändern, und der Wischermotor 10 bleibt eingeschaltet.

Sobald die Beregnung der Windschutzscheibe aufhört, werden die Wischblätter die Windschutzscheibe trockenwischen. Infolge fehlender Nässe wird die Amplitude des Sensorsignals 18 kleiner als die vorgegebene Schwelle S. Damit geht der Ausgang des Komparators 20 auf logisch L. Der Ausgang des UND-Gatters 22 wird L, die Ansteuerung des Monoflops 23 fällt weg, und dieses fällt in seine Grundstellung zurück. Der Q-Ausgang des Monoflops 23 wird logisch L, damit das Schaltrelais 11 entregt, und der Schaltkontakt 12 öffnet. Der Scheibenwischermotor 10 ist von der Versorgungsspannung $U_B$ getrennt.

Bei nicht ordnungsgemäßen Wischerblättern kommt es häufig zu Bildung von Wasserschlieren auf der Windschutzscheibe, die selbst dann noch an der Windschutzscheibe haften, wenn deren Beregnung bereits weggefallen ist. Diese Wasserschlieren bewirken eine relativ große Signalamplitude des Sensorsignals, die größer ist als die Schwelle S. Da bei fehlender Beregnung die Signalamplitude nicht anwächst, sondern konstant bleibt oder sich gar reduziert, tritt am Ausgang des Differenzierglieds 21 ein L-Signal auf. Der Ausgang des UND-Gatters 222 wird logisch L. Damit fällt wegen fehlender Ansteuerung das Monoflop 23 zurück, das Schaltrelais 11 wird in gleicher Weise entregt, und der Scheibenwischermotor 10 wird ebenfalls abgeschaltet. Damit ist die rechtzeitige Abschaltung des Scheibenwischermotors 10 bei Regenende sichergestellt, unabhängig davon, ob sich auf der Windschutzscheibe eine kleinere oder größere Anzahl von Wasserschlieren bildet. Durch dieses rechtzeitige Abschalten des Wischermotors 10 wird ein zumindest partielles Trockenwischen der Wischblätter und des damit verbundenen Ratterns letzterer auf der Windschutzscheibe verhindert.

## Ansprüche

1. Vorrichtung zum regenabhängigen Ein- und Ausschalten eines elektrischen Scheibenwischermotors in Fahrzeugen mit einem auf Nässe auf der Windschutzscheibe des Fahrzeugs ansprechenden Sensor, der ein Sensorsignal mit von der Feuchte abhängiger Amplitude generiert, mit einem im Stromkreis des Scheibenwischermotors angeordneten elektrisch gesteuerten Schalter und mit einer den Schalter steuernden Steuereinheit, die in Abhängigkeit von der Größe der Steuersignalamplitude ein Einschaltsignal generiert, dadurch gekennzeichnet, daß die steuereinheit (16) die Änderungstendenz des Sensorsignals detektiert und ein Einschaltsignal nur dann generiert, wenn oberhalb einer vorgegebenen Amplitudengröße des Sensorsignals eine zeitliche Amplitudenzunahme im Sensorsignal vorliegt.

2. Vorrichtung nach Anspruch 1, dadurch gekennzeichnet, daß die Steuereinheit (16) einen Vergleicher (20) und ein Differenzierglied (21) aufweist, an dessen Eingängen das Sensorsignal liegt, daß der Vergleicher (20) ein Ausgangssignal generiert, wenn das Sensorsignal einen Vorgabewert übersteigt, daß das Differenzierglied (21) ein Ausgangssignal generiert, wenn die Sensorsignalamplitude anwächst, und daß die Ausgangssignale von Vergleicher (20) und Differenzierglied (21) derart miteinander verknüpft sind, daß nur bei zeitgleichem Auftreten beider Ausgangssignale ein Einschaltsignal an dem Schalter (11) liegt.

## Claims

1. Device for rain-induced switching on and off of an electric windscreen wiper motor in vehicles, having a sensor which responds to moisture on the windscreen of the vehicle and which generates a sensor signal with an amplitude as a function of the moisture, having an electrically controlled switch arranged in the circuit of the windscreen wiper motor, and having a control unit which controls the switch and generates a switching-on signal as a function of the magnitude of the control signal amplitude, characterized in that the control unit (16) detects the change tendency of the sensor signal and generates a switching-on signal only when the amplitude of the sensor signal increases in time above a predetermined amplitude of the sensor signal.

2. Device according to Claim 1, characterized in that the control unit (16) has a comparator (20) and a differentiating element (21), at the inputs of which the sensor signal is present, in that the comparator (20) generates an output signal if the sensor signal exceeds a predetermined value, in that the differentiating element (21) generates an output signal if the sensor signal amplitude increases, and in that the output signals from comparator (20) and differentiating element (21) are combined with one another in such a way that a switching-on signal is present at the switch (11) only when both output signals occur simultaneously.

## Revendications

1. Dispositif pour la mise en et hors circuit en cas de pluie d'un moteur électrique d'essuie- glace dans des véhicules, avec un détecteur réagissant à l'humidité sur le pare-brise du véhicule, et qui déclenche un signal d'une amplitude dépendant de l'humidité, avec un commutateur commandé électriquement disposé dans le circuit du courant d'alimentation du moteur d'essuie-glace et avec une unité de commande commandant ce commutateur, qui engendre un signal de mise en circuit en fonction de la grandeur de l'amplitude du signal de commande, dispositif caractérisé en ce que l'unité de commande (16) détecte la tendance à la modification du signal de détecteur et n'engendre un signal de mise en circuit que lorsqu'il y a un accroissement d'amplitude dans le temps du signal de détecteur au-dessus d'une grandeur d'amplitude prédéterminée de ce signal de détecteur.

2. Dispositif selon la revendication 1, caractérisé en ce que l'unité de commande (16) comporte un comparateur (20) et un organe différentiateur (21) aux entrées desquelles s'applique le signal du détecteur, en ce que le comparateur (20) engendre un signal de sortie lorsque le signal de détecteur dépasse une valeur prédéfinie, en ce que l'organe différentiateur (21) engendre un signal de sortie lorsque l'amplitude du signal de détecteur croît, et en ce que les signaux de sortie du comparateur (20) et de l'organe différentiateur (21) sont combinés ensemble de façon qu'un signal de mise en circuit s'applique au commutateur (11) seulement lorsque ces deux signaux de sortie interviennent simultanément.